# EUROPEAN PATENT APPLICATION

(11) **EP 3 190 562 A1**
(43) Date of publication of application: **12.07.2017**
(21) Application number: 15838184.8
(22) Date of filing: 02.09.2015
(51) Int. Cl.: G06Q 50/04, G06Q 10/06

(54) **QUALITY MANAGEMENT SERVER FOR RECYCLABLE WASTE PAPER AND METHOD FOR SAME**

(30) Priority: 02.09.2014 KR 20140116224
(71) Applicant: Balance Industry Co., Ltd., Seoul 137-842 (KR); Uhm, Baik Yong, Seoul 151-801 (KR)
(72) Inventor: UHM, Baik Yong, Seoul 151-801 (KR)
(74) Representative: dompatent von Kreisler Selting Werner - Partnerschaft von Patent- und Rechtsanwälten mbB
(86) International application number: PCT/KR2015/009239
(87) International publication number: WO 2016/036131

(57) **Abstract**

Provided is a quality management server for recyclable waste paper and a method for the same. The quality management server for recyclable waste paper according to an embodiment of the present invention comprises: a storage and release registration unit at which storage information or release information of bales of the recyclable waste paper is registered via an administrator or a business operator terminal; an inspection registration unit at which inspection information including the moisture content of a bale selected from among registered bales is registered via the administrator or business operator terminal; a moisture management unit for determining, on the basis of the registered moisture content, the average moisture content and the total reduction rate corresponding thereto; and a management DB in which the storage information or release information, and the inspection information are saved.

## Description

### [Technical Field]

The present invention relates to a quality management server for a recyclable waste paper and a method for the same, and more particularly, to a quality management server for a distribution stage before supplying a collected waste paper to be recycled and a method for the same.

### [Background Art]

In accordance with shortage of resources and environmental destruction caused by development of industry, it is focused to eco-friendly recycle resources. One of recyclable resources is a paper. Specifically, since the papers are applicable to various recycled products according to applications methods, the papers attract a big attention.

Similarly to most resource recycling processes, the papers are recycled through processes of collecting, distributing, and recycling used papers, that is, waste papers. However, during the collecting process and the distributing process, the processes are not clearly managed, so that reliability of products of the recyclable waste paper brings a controversial issue. Further, in an interim collecting point, a case in that water is sprayed onto the waste paper to increase a weight of the waste paper is frequently found and thus the reliability of the product such as a quality and a weight of the product is lowered.

Accordingly, a management system which may easily trace the product during the distribution process of the waste paper, improve the quality of the product, and secure the reliability of the product is demanded.

### [Disclosure]

### [Technical Problem]

In order to solve the above-described problem of the related art, an exemplary embodiment of the present invention has been made in an effort to provide a quality management server for a recyclable waste paper which improves reliability of a recyclable waste paper product according to a state of the waste paper such as moisture in an interim distribution step of the waste paper to be recycled and a method for the same.

### [Technical Solution]

According to an aspect of the present invention, a quality management server for recyclable waste paper includes a storage and release registration unit at which storage information or release information of bales of the recyclable waste paper is registered via an administrator or a business operator terminal; an inspection registration unit at which inspection information including the moisture content of a bale selected from among registered bales is registered via the administrator or business operator terminal; a moisture management unit for determining, on the basis of the registered moisture content, the average moisture content and the total reduction rate corresponding thereto; and a management DB in which the storage information or release information, and the inspection information are saved.

In an exemplary embodiment, the inspection information may include a size and a compression rate of the bale of the recyclable waste paper.

In an exemplary embodiment, the total reduction rate may be determined by further considering the size and the compression rate of the bale.

In an exemplary embodiment, the inspection registration unit registers the inspection information for every storage customer and the moisture management unit determines the total reduction rate for every storage customer.

In an exemplary embodiment, the quality management server for recyclable waste paper may further include a stock management unit which calculates current stock information according to the storage information and the release information; an inquiring and processing unit which searches information from the management DB according to an inquiry request on the storage information, the release information, the stock information, and the record of the bales from the administrator or the business operator terminal to provide the information; and a report generating unit which generate a report according to the inquiry result.

In an exemplary embodiment, the inspection registration unit may register a compressive strength, a state of moisture, cooperativeness of the customer, and cooperativeness of a transportation company at the time of releasing the bale and the report generating unit may generate an inspection evaluation report based on the registered contents.

In an exemplary embodiment, the inquiring and processing unit may search the storage information, the release information, storage inspect contents, release inspect contents, and the reduction rate from the management DB to generate record information of the bale.

In an exemplary embodiment, a barcode of the bale may be generated according to the storage information registered by the storage and release registration unit.

In an exemplary embodiment, the server may further include an alternative barcode management unit which registers an alternative barcode onto the bale when the barcode of the bale is damaged at the time of releasing the bale and traces and manages the release information corresponding to the alternative barcode.

In an exemplary embodiment, the management DB may further include: code information in which a basic code for a type of the recyclable waste paper, a customer, and a type of storage vehicle are saved and stock information generated on the basis of the storage information and the release information.

According to another aspect of the present invention, a method of managing a quality of a recyclable waste paper includes: a storage registration step of registering storage information of bales of the recyclable waste paper and inspection information including a moisture content of the bale and determining an average moisture content on the basis of the registered moisture content and a total reduction rate corresponding thereto; a release registering step of registering release information of the bale and inspection information including the moisture content of the bale and determining an average moisture content on the basis of the registered moisture content and a total reduction rate corresponding thereto; a step of calculating current stock information according to the storage information and the release information to update stock information; and an inquiring and processing step of searching the information according to an inquiry request on the storage information, the release information, the stock information, and the record of the bales to provide the information.

In an exemplary embodiment, the storage registering step may include a step of registering a storage information schedule of the bale, a step of registering an actual storage contents of the bale; a step of registering inspection information including a moisture content of a bale selected from storage registered bales; and a step of determining an average moisture content on the basis of the registered moisture content and a total reduction rate corresponding thereto.

In an exemplary embodiment, the release registering step may include a step of registering of a release information schedule of the bale; a step of registering an actual release content of the bale; a step of registering inspection information including a moisture content of a bale selected from release registered bales; and a step of determining an average moisture content on the basis of the registered moisture content and a total reduction rate corresponding thereto.

In an exemplary embodiment, in the inquiring and processing step, the storage information, the release information, storage inspection contents, and release inspection contents, and the reduction rate may be searched to generate record information of the bale.

### [Advantageous Effects]

According to the quality management server for a recyclable waste paper and the method for the same of the exemplary embodiment of the present invention, the waste paper product is managed according to the state of the paper such as moisture in the interim distribution step, thereby improving a quality of the recyclable waste paper.

Further, according to the quality management server for a recyclable waste paper and the method for the same of the exemplary embodiment of the present invention, a reduction rate with respect to a weight of the product in accordance with inflow of moisture is applied, to perform the storage and release management with a precise weight, thereby improving the reliability of the product in the distribution step.

Further, according to the quality management server for a recyclable waste paper and the method for the same of the exemplary embodiment of the present invention, the record of a bale is managed according to a barcode, so that when there is a problem, the product is easily traced during the distribution step, thereby further improving the quality and reliability of the product.

### [Description of Drawings]

FIG. 1 is a schematic block diagram of a quality management system for a recyclable waste paper according to an exemplary embodiment of the present invention.
FIG. 2 is a schematic block diagram of a quality management server of a recyclable waste paper according to an exemplary embodiment of the present invention.
FIG. 3 is a view of a detailed configuration of a management DB of FIG. 1.
FIG. 4 is a flowchart of a quality management method of a recyclable waste paper according to an exemplary embodiment of the present invention.
FIG. 5 is a flowchart illustrating a detailed configuration of a product storage information inputting and registering step of FIG. 4.
FIG. 6 is an example of a screen of a terminal when product storage contents are registered in FIG. 5.
FIG. 7 is an example of a screen of a terminal when storage inspection is registered in FIG. 5.
FIG. 8 is a flowchart illustrating a detailed configuration of a product release information inputting and registering step of FIG. 4.
FIG. 9 is an example of a screen of a terminal for an inspection evaluation report when release inspection is registered in FIG. 8.
FIG. 10 is an example of a screen of a terminal at the time of searching a stock status in a quality management method for a recyclable waste paper according to an exemplary embodiment of the present invention.
FIG. 11 is an example of a screen of a terminal at the time of searching a storage status in a quality management method for a recyclable waste paper according to an exemplary embodiment of the present invention.
FIG. 12 is an example of a screen of a terminal at the time of searching a release status in a quality management method for a recyclable waste paper according to an exemplary embodiment of the present invention.
FIG. 13 is an example of a screen of a terminal when storage is traced by an alternative barcode in a quality management method for a recyclable waste paper according to an exemplary embodiment of the present invention.
FIG. 14 is an example of a screen of a terminal at the time of inquiring a bale record in a quality management method for a recyclable waste paper according to an exemplary embodiment of the present invention.

### [Best Mode]

Hereinafter, exemplary embodiments of the present invention will be described more fully with reference to the accompanying drawings for those skilled in the art to easily implement the present invention. As those skilled in the art would realize, the described embodiments may be modified in various different ways and is not limited to the exemplary embodiments described herein. In order to clearly describe the present invention, in the drawings, parts which are not related to the description are omitted. Through the specification, like reference numerals designate like elements throughout the specification.

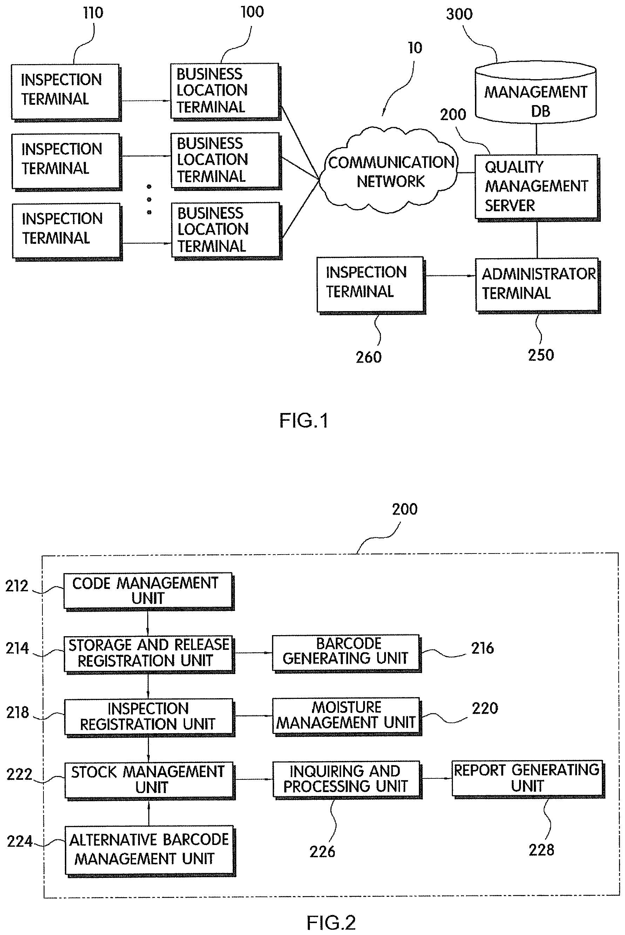

FIG. 1 is a schematic block diagram of a quality management system for a recyclable waste paper according to an exemplary embodiment of the present invention. Hereinafter, the quality management system for a recyclable waste paper according to the exemplary embodiment of the present invention will be described in more detail with reference to the drawings.

Referring to FIG. 1, the quality management system 10 for a recyclable waste paper according to the exemplary embodiment of the present invention includes an inspection terminal 110, a business office terminal 100, a quality management server 200, an administrator terminal 250, an inspection terminal 260, and a management DB 300.

The inspection terminal 110 is a terminal which inspects a state of a waste paper stored from an interim collection company, and for example, may be a PDA which is used by an inspector. A photographed image of a product state of the waste paper and inspection information may be input to the inspection terminal 110.

The business office terminal 100 is provided in a plurality of business offices and is connected to the quality management server 200 through a wired/wireless communication network so that storage and release related information of the waste paper product may be input thereto. The business office terminal 100 receives inspection information such as an image or a text file from the inspection terminal 110 which is used by the inspector to register or transmit the inspection information to the quality management server 200.

The quality management server 200 manages a moisture rate of the waste paper product based on the storage and release information input and registered from the business office terminal 100 and processes and provides inquiries requested from the administrator terminal 250.

Hereinafter, the quality management server 200 will be described in more detail with reference to FIG. 2. FIG. 2 is a schematic block diagram of a quality management server of a recyclable waste paper according to an exemplary embodiment of the present invention.

As illustrated in FIG. 2, the quality management server 200 includes a code management unit 212, a storage and release registration unit 214, a barcode generating unit 216, an inspection registration unit 218, a moisture management unit 220, a stock management unit 222, an alternative barcode management unit 224, an inquiring and processing unit 226, and a report generating unit 228.

The code management unit 212 may assign and manage a code to efficiently manage the waste paper by classifying a customer, a vehicle, and a product name and managing codes corresponding thereto. For example, the customer is classified into a purchasing office of the waste paper product, a sales office, a business office, a transportation company, a paper manufacturer, and the like. The vehicle is classified into a cargo, a container, a flat panel, a self-owned vehicle, production, and the like. The product name is classified into a burlap paper, a newspaper, a leaflet, a book paper, a magazine, and the like. Further, the code management unit 212 may designate and manage a level of a usage authority of the user.

The storage and release registration unit 214 may register storage information or release information of bales of recyclable waste papers through the business office terminal 100 or the administrator terminal 250. Further, the storage and release registration unit 214 may store the registered information in storage information 314 and release information 316 of the management DB 300.

The barcode generating unit 216 may generate a barcode corresponding to the bale according to the storage information registered in the storage and release registration unit 214. As described above, the barcode output from the barcode generating unit 216 is distributed to the inspector to be attached on every bale to be stored.

The inspection registration unit 218 may register inspection information including a moisture content for a bale selected from the bales registered from the storage and release registration unit 214 via the business office terminal 100 or the administrator terminal 250. That is, the inspection information on a bale which is arbitrarily selected by the inspector, among bales to be stored or released, may be selectively registered.

In this case, when the bale of recyclable waste paper is stored, the inspection registration unit 218 may register the inspection information which is registered through the business office terminal 100 or an administrator terminal 250 for every storage customer and the inspection information is stored in the inspection information 318 of the management DB 300. Here, the inspection information may include a size and a compression rate of the bale of the recyclable waste paper together with a moisture content of the bale of the recyclable waste paper.

Further, similarly to the storing of the recyclable waste paper, when the bale of the recyclable waste paper is released, the inspection registration unit 218 may register the size and the compression rate of the bale of the recyclable waste paper together with the moisture content of the bale of the recyclable waste paper to be released. Furthermore, when the bale is released through the business office terminal 100 or the administrator terminal 250, a compressive strength, a state of a moisture, cooperativeness of the corresponding customer, and cooperativeness of the transportation company are registered through the business office terminal 100 or the administrator terminal 250 and the registration information may be stored in the inspection information 318 of the management DB 300.

The moisture management unit 220 may determine an average moisture content on the basis of the moisture content of the bale of the waste paper registered by the inspection registration unit 218 and a total reduction rate corresponding thereto. That is, the moisture management unit 220 measures the moisture content which is flowed in the bale of the waste paper during an interim collection process to calculate the reduction rate for the corresponding bale and applies the reduction rate to the information of the bale, so that the reliability of the product may be improved. In this case, the total reduction rate may be determined by further considering the size and the compression rate of the bale together with the moisture content of the bale. Here, the moisture management unit 220 may determine the total reduction rate for every storage customer or for date, so that the reliability of the product may be managed for every storage customer.

The stock management unit 222 calculates current stock information corresponding to the storage information or the release information which is registered by the storage and release registration unit 214 to be stored in the management DB 300 to store the current stock information in stock information 320 of the management DB 300. Whenever the storage or release of product is registered, the stock management unit 222 automatically calculates the current stock information to update the stock information 320. Alternatively, the stock management unit 222 may calculate the current stock information according to the storage information or the release information which is stored in the management DB when the inquiring and processing unit 226 checks the stock status.

When a barcode of a specific bale is damaged or lost at the time of releasing the bale, the alternative barcode management unit 224 may register an alternative barcode which is attached on the bale by an inspector. That is, when the barcode is damaged or lost by a forklift truck during the bale storage and release operation process, the inspector may use the alternative barcode at the time of releasing the bale and the alternative barcode is registered through the business office terminal 100 or the administrator terminal 250 from the inspection terminal 110 or 260. In this case, the alternative barcode management unit 224 traces and manages release information corresponding to the alternative barcode attached on the bale. More specifically, since the alternative barcode is arbitrarily used instead of the damaged barcode by the inspector, the alternative barcode does not include the information of the bale. Therefore, a task to connect the storage and release information of the corresponding bale thereto may be performed through the alternative barcode management unit 224.

The inquiring and processing unit 226 searches the corresponding information from the management DB 300 and provides the information in accordance with an inquiry request on the storage information, release information, stock information, and a record of the bale from the business office terminal 100 or the administrator terminal 250. Here, the inquiring and processing unit 226 may interlink information stored in the management DB 300 with each other to generate a result of a specific inquiry. For example, when the inquiry on the record information of the bale is requested, the inquiring and processing unit 226 searches the storage information, the release information, storage inspection contents, release inspection contents, and the reduction rate from the management DB 300 to generate record information of the corresponding bale.

The report generating unit 228 may generate various reports according to the inquiry result performed by the inquiring and processing unit 226. For example, the report generating unit 228 may generate an inspection evaluation report with respect to the inspection evaluation information registered by the inspection registration unit 218 and generate and provide a status report according to storage, release, stock inquiry.

Referring to FIG. 1 again, the administrator terminal 250 has the similar function to the above-described business office terminal 100 and is directly connected to the quality management server 200 to further include a management function to set an authority for every terminal. Therefore, the administrator terminal 250 may receive storage and release information of the waste paper product, similarly to the business office terminal 100.

The inspection terminal 260 has the same function as the above-described inspection terminal 110. When the administrator terminal 250 is used as a function of the business office terminal 100, the inspection terminal 260 may provide the inspection information to the administrator terminal 250.

The management DB 300 may store storage information or release information and inspection information which are registered through the quality management server 200.

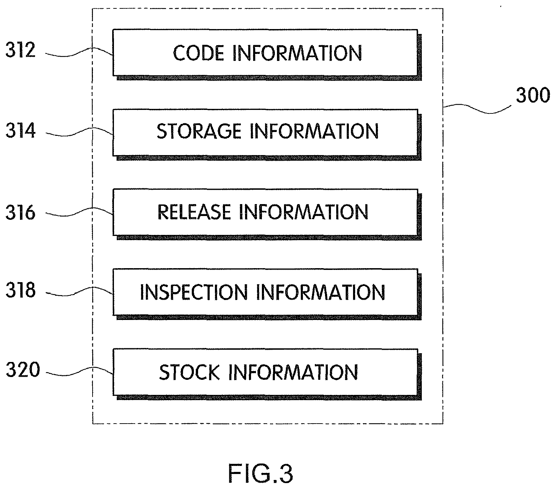

Hereinafter, the management DB 300 will be described in more detail with reference to FIG. 3. FIG. 3 is a view of a detailed configuration of a management DB of FIG. 1.

The management DB 300 includes code information 312, storage information 314, release information 316, inspection information 318, and stock information 320.

In the code information 312, various basic codes which are registered and managed in the code management unit 212 are saved. Classification of a type of recyclable waste paper, the customer, and a type of storage vehicle may be stored as the basic codes. For example, the customer is classified into a purchasing office, a sales office, a business office of the waste paper product, a paper manufacturer, and the like. The vehicle is classified into a cargo, a container, a flat panel, a self-owned vehicle, production, and the like. The product name is classified into a burlap paper, a newspaper, a leaflet, a book paper, a magazine, and the like.

Storage information which is registered by the storage and release registration unit 214 is stored in the storage information 314. For example, a stored date, a customer, an item, a quantity, a net weight, a vehicle number, a management service provider, a type of transportation vehicle, and the like may be stored.

Storage information which is registered by the storage and release registration unit 214 is stored in the release information 316. For example, a released date, classification, a place of business, a product name, a weight, a customer, a vehicle number, and the like, may be stored.

In the inspection information 318, the inspection information registered by the inspection registration unit 218 and the total reduction information calculated by the moisture management unit 220 are saved. For example, contents measured by the inspector, such as a storage bale barcode, a measured moisture value, a compression rate, and a size, inspection contents input by the inspector, such as a box content, O/T evaluation, and remarks, and total reduction information calculated based on an average moisture, a weight, and a compression rate may be stored.

Stock information generated based on the storage information and the release information from the storage and release registration unit 214 is stored in the stock information 320, for example, the business office, a stored product, a stocked date, a weight of total stocks, and a type of product may be stored.

With this configuration, the quality management system 10 of the recyclable waste paper according to the exemplary embodiment of the present invention manages the waste paper according to a state of a waste paper such as a moisture in an interim distribution step to improve a quality of the recyclable waste paper and applies a reduction rate with respect to a weight of the product in accordance with inflow of the moisture to perform storage and release management with an accurate weight, thereby improving a reliability of the product during the distribution step. Further, the record of the bale is managed according to the barcode, so that when there is a problem, it is easy to trace the product during the distribution step, thereby further improving the quality and the reliability of the product.

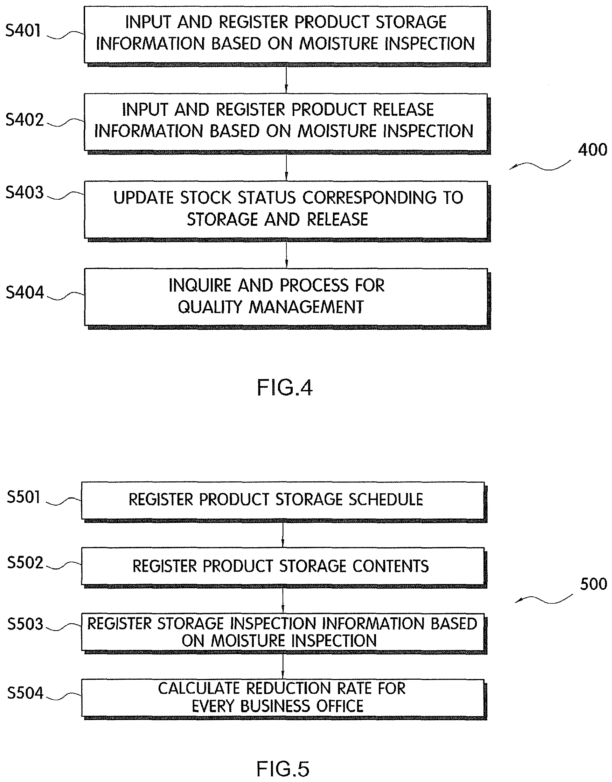

Hereinafter, a quality management method of a recyclable waste paper according to an exemplary embodiment of the present invention will be described with reference to FIGS. 4 to 14. FIG. 4 is a flowchart of a quality management method of a recyclable waste paper according to an exemplary embodiment of the present invention.

As illustrated in FIG. 4, the quality management method 400 of the recyclable waste paper is configured by a product storage information input and registration step S401 based on moisture inspection, a product release information input and registration step S402 based on moisture inspection, a stocked product status updating step S403 according to the storage and release of the product, and an inquiring and processing step S404 for quality management.

More specifically, as illustrated in FIG. 4, first, when the waste paper product is stored, storage information of a bale of the recyclable waste paper and inspection information including a moisture content of the bale are registered and an average moisture content and a total reduction rate corresponding thereto are determined based on the registered moisture content (step S401).

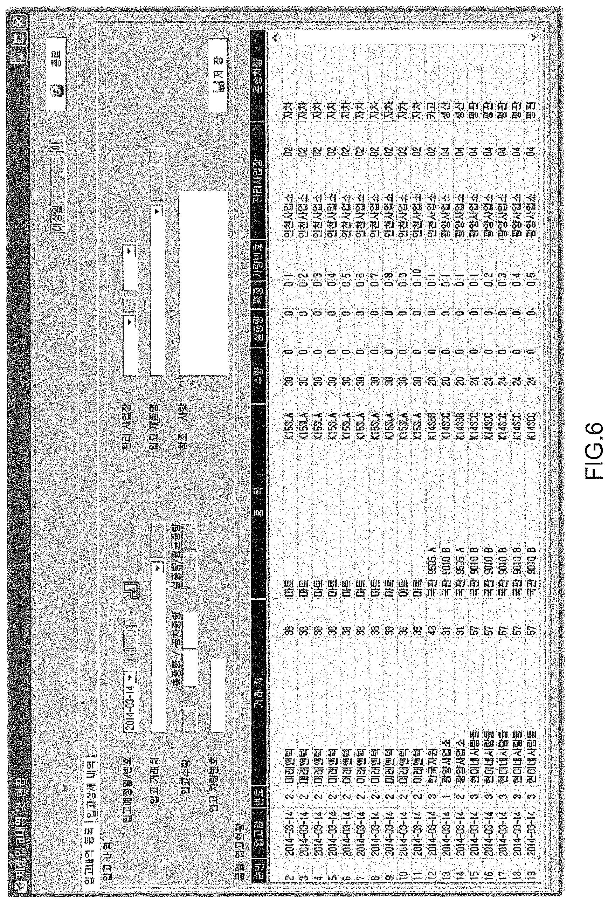

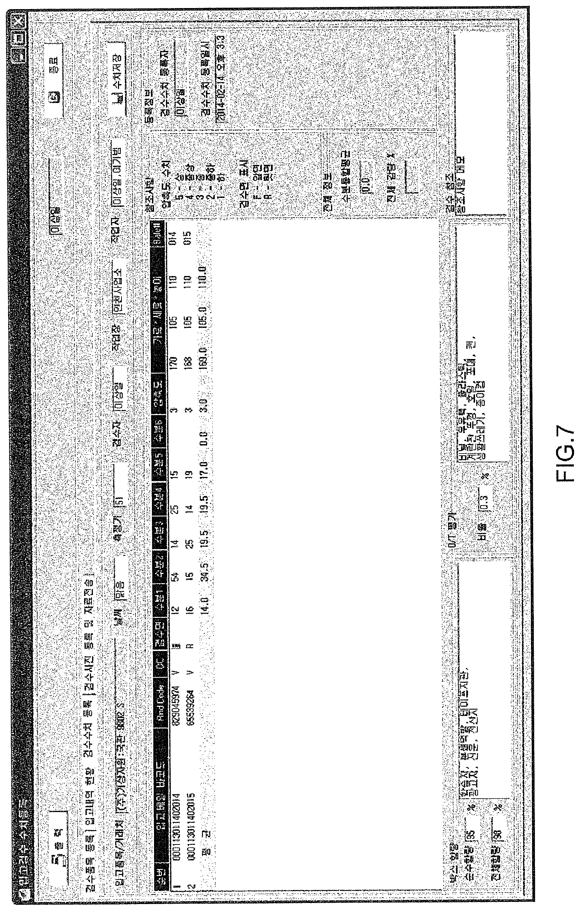

Hereinafter, a product storing method will be described in more detail with reference to FIGS. 5 to 7. FIG. 5 is a flowchart illustrating a detailed configuration of a product storage information input and registration step of FIG. 4. FIG. 6 is an example of a screen of a terminal when product storage contents are registered in FIG. 5, and FIG. 7 is an example of a screen of a terminal when storage inspection is registered in FIG. 5.

As illustrated in FIG. 5, in the storage registration method 500, a storage information schedule is registered first (step S501). The storage information schedule, for example, is to set an item for every customer, a quantity of bales to be stored, a management business office, and the like. Storage information is temporarily stored according to a tendency of each customer and previously scheduled information in advance.

Next, when the bale is stored by the inspector, actual storage contents of the bale may be registered based on actually inspected contents (step S502). For example, inspected contents on a weight, a quantity, and the like actually measured by the inspector at the time of storing the bales may be registered.

Next, storage inspection information including a moisture content of a bale which is arbitrarily selected from the storage registered bales is registered (step S503). That is, the inspection information of the bale performed by the inspector, for example, a moisture content, a size, a weight, a compression rate, a box content, and the like may be registered. In this case, a photographed product photograph and a text file from an inspection terminal such as a PDA may be registered by the inspector.

Next, an average moisture content and a total reduction rate corresponding thereto may be determined based on the registered moisture content (step S504). In this case, the total reduction rate may be determined by further considering the size of the bale and the compression rate together with the moisture content of the bale. Here, the total reduction rate may be determined for every storage customer and thus the reliability of the product for every storage customer may be managed.

Referring to FIG. 4 again, inspection information including release information of the bale and the moisture content of the bale is registered and the average moisture content on the basis of the registered moisture content and a total reduction rate corresponding thereto may be determined (step S402).

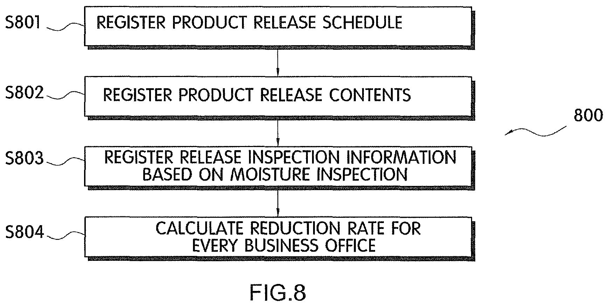

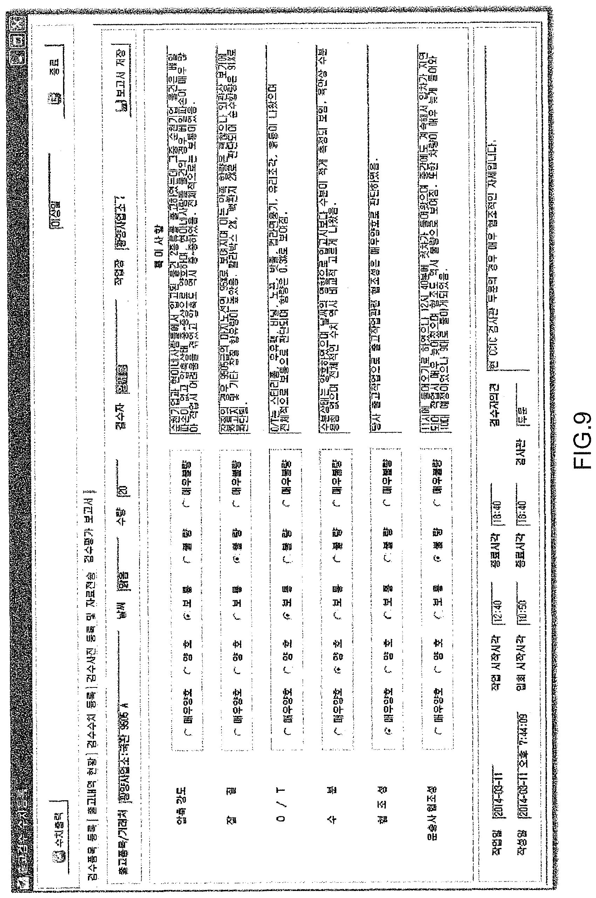

Hereinafter, a product releasing method will be described in more detail with reference to FIGS. 8 to 9. FIG. 8 is a flowchart illustrating a detailed configuration of a product release information input and registration step of FIG. 4 and FIG. 9 is an example of a screen of a terminal for an inspection evaluation report when release inspection is registered in FIG. 8.

As illustrated in FIG. 8, in the release registration method 800, a release information schedule is registered first (step S801). The release information schedule, for example, is to set an item for every customer, a quantity of bales to be released, a management business office, a vehicle type, and the like. Release information is temporarily stored according to a tendency of each customer and previously scheduled information in advance.

Next, when the bale is released by the inspector, actual release contents of the bale may be registered based on actually inspected contents (step S802). For example, inspected contents on a weight, a quantity, and the like actually measured by the inspector at the time of releasing the bales may be registered.

Next, release inspection information including a moisture content of a bale which is arbitrary selected from the release registered bales is registered (step S803). That is, the inspection information of the bale performed by the inspector, for example, a moisture content, a size, a weight, a compression rate, a box content, and the like may be registered. In this case, a photographed product photograph and a text file from an inspection terminal such as a PDA may be registered by the inspector. Further, an inspection evaluation item which is evaluated by the inspector, for example, evaluation information such as a compressive strength, a paper quality, an O/T, a moisture, cooperativeness, and cooperativeness of a transportation company may be registered.

Next, an average moisture content and a total reduction rate corresponding thereto may be determined based on the registered moisture content (step S804). In this case, the total reduction rate may be determined by further considering the size of the bale and the compression rate together with the moisture content of the bale. Here, the total reduction rate may be determined for every storage customer and thus the reliability of the product for every storage customer may be managed.

Referring to FIG. 4 again, current stock information is calculated according to the storage information and the release information to update stock information (step S403). That is, the current stock information is automatically calculated whenever the product is stored or released, or registered to update the stock information. Alternatively, the stock information may be calculated at the time of inquiry described below without updating the stock information in real time.

Next, the information is searched and provided in accordance with an inquiry request on the storage information, the release information, the stock information, and a record of the bale (step S404).

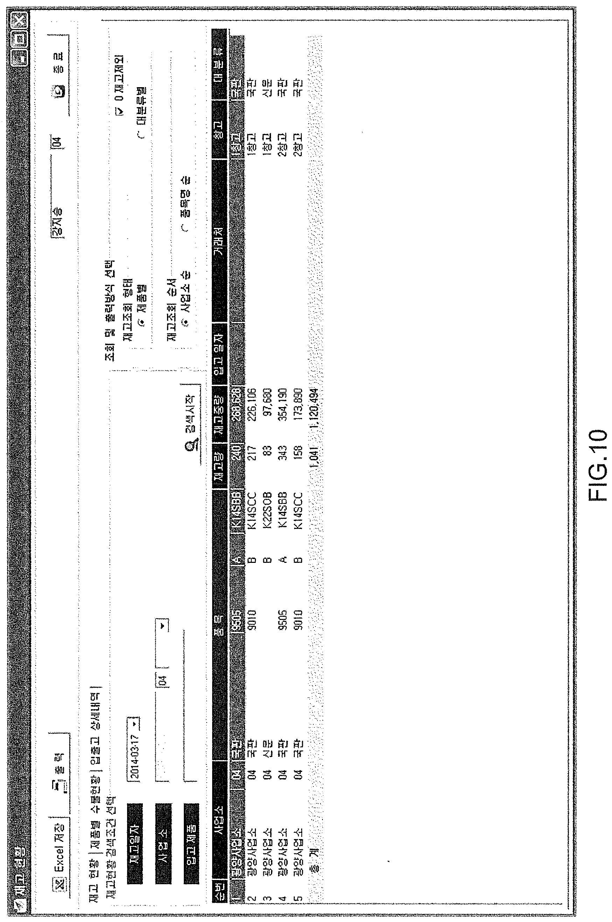

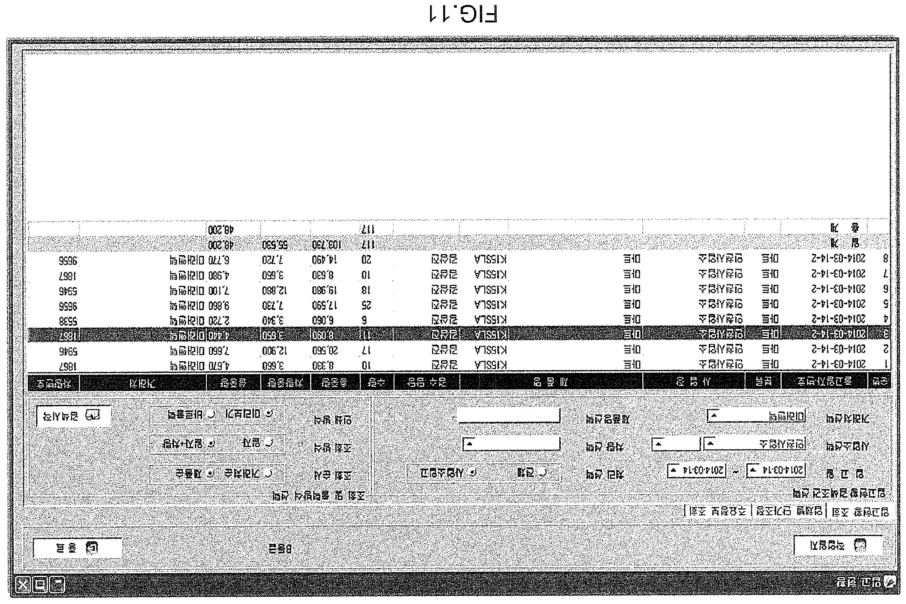

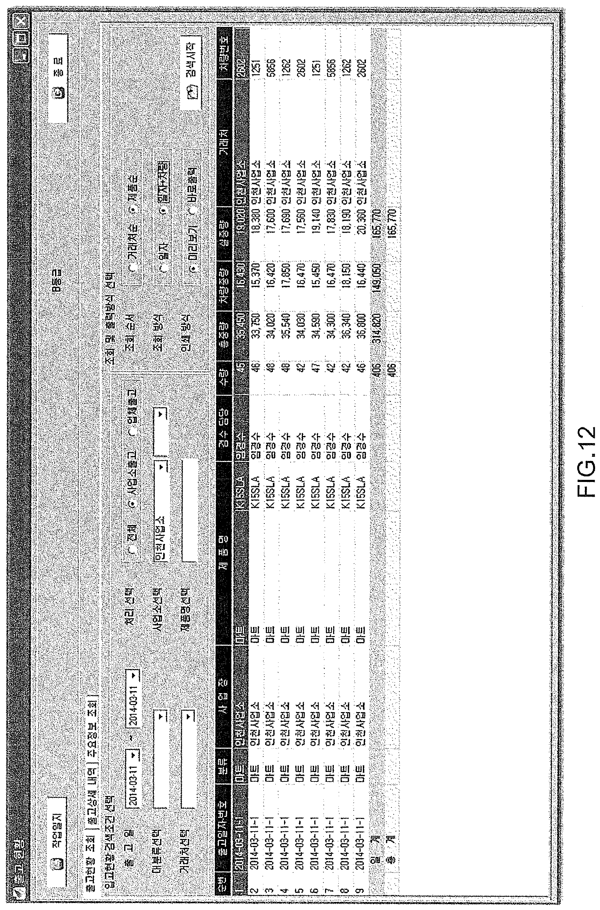

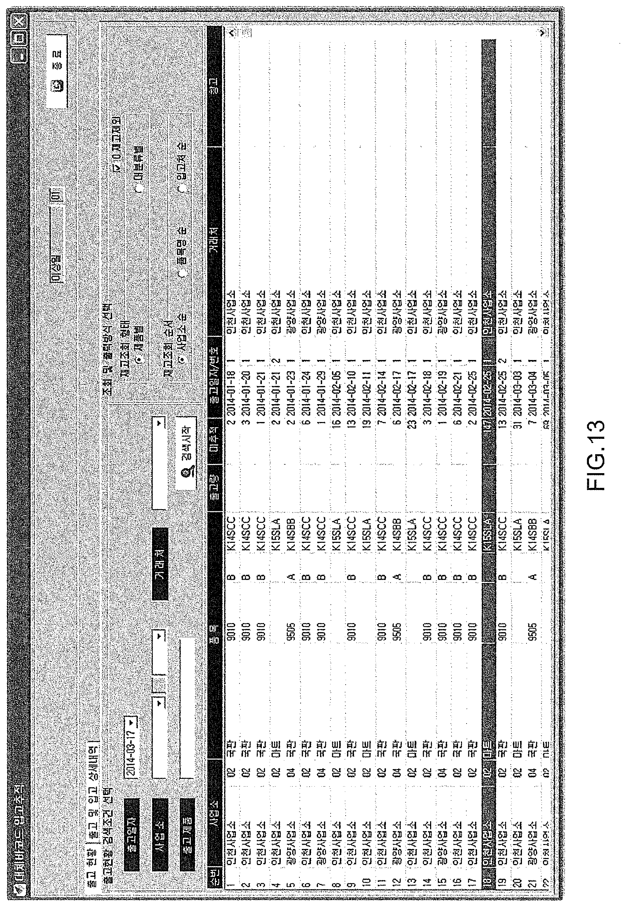

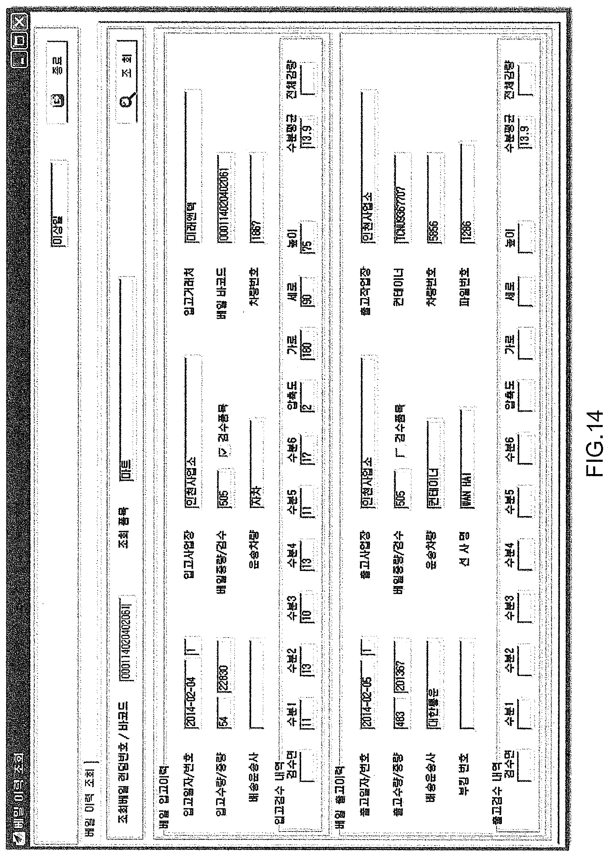

Hereinafter, an inquiring and processing method for quality management will be described in more detail with reference to FIGS. 10 to 14. FIG. 10 is an example of a screen of a terminal at the time of searching a stock status in a quality management method for a recyclable waste paper according to an exemplary embodiment of the present invention, FIG. 11 is an example of a screen of a terminal at the time of searching a storage status in a quality management method for a recyclable waste paper according to an exemplary embodiment of the present invention, FIG. 12 is an example of a screen of a terminal at the time of searching a release status in a quality management method for a recyclable waste paper according to an exemplary embodiment of the present invention, FIG. 13 is an example of a screen of a terminal when storage is traced by an alternative barcode in a quality management method for a recyclable waste paper according to an exemplary embodiment of the present invention, and FIG. 14 is an example of a screen of a terminal at the time of inquiring a bale record in a quality management method for a recyclable waste paper according to an exemplary embodiment of the present invention.

First, an inquiry on a current stock status for every date, business office, and stored product is requested, current stock information which is generated according to the storage and release status is searched in step S403 and the result is provided as illustrated in FIG. 10. In this case, the stock status may include a business office, an item, a stocked quantity, a stocked weight, a stored date, a customer, and a warehouse. Alternatively, when the stock status updating step S403 is omitted, the current stock information is calculated according to the storage status or the release status at the time of requesting inquiry of the stock status to be provided.

Next, an inquiry on a storage status for a specific period for a storage period, a business office, a customer, a vehicle, and a product is requested and the storage information registered in step S401 is searched to provide the result as illustrated in FIG. 11. In this case, the storage status includes a release date, a product classification, a business office, a product name, a quantity, a net weight, a customer, and a vehicle number. Further, when main information on the storage status is inquired as a sub menu, storage inspection information related to the storage status is additionally searched to be provided.

Next, when an inquiry on a release status for a specific period for a release period, a product classification, a customer, a business office, and a product name is requested, the release information registered in step S402 is searched to provide the result as illustrated in FIG. 12. In this case, the release status includes a release date, a product classification, a business office, a product name, a quantity, a net weight, a customer, and a vehicle number. Further, when main information on the release status is inquired as a sub menu, release inspection information related to the release status is additionally searched to be provided.

Next, an inquiry on an alternative barcode status according to the release status for a release date, a business office, a release product, and a customer is requested, output information including information on an alternative barcode which is attached by the inspector at the time of releasing the bale, instead of the damaged barcode, may be provided. In this case, as illustrated in FIG. 13, an item which is denoted by "not-traced" is products corresponding to the alternative barcode. Next, the information of bales is selectively checked to connect the alternative barcode to the corresponding barcode later.

Next, when an inquiry on the barcode is requested, the storage information, the release information, storage inspection contents, release inspection contents, and a reduction rate for the corresponding barcode are searched to generate record information of the bale and provide the result. In this case, the inspection information is formed only for a bale which is arbitrarily selected by the inspector. Therefore, as illustrated in FIG. 14, the storage inspection contents are represented in the bale storage record but the release inspection contents may not be represented in the bale release record. In this case, the moisture average may be a moisture average calculated at the time of storage.

As described above, the quality management method of the recyclable waste paper according to the exemplary embodiment of the present invention manages the waste paper according to a waste paper status such as a moisture in an interim distribution step to improve a quality of the recyclable waste paper and applies a reduction rate with respect to a weight of the product in accordance with inflow of the moisture to perform storage and release management with an accurate weight, thereby improving a reliability of the product during the distribution step. Further, the record of the bale is managed according to the barcode, so that when there is a problem, it is easy to trace the product during the distribution step, thereby further improving the quality and the reliability of the product.

The above-described method may be implemented by the quality management server 200 as illustrated in FIG. 1 and specifically, implemented by a software program which executes the steps. In this case, the programs may be stored in a computer readable recording medium or transmitted by a transmission media or a computer data signal which is coupled to a carrier wave in a communication network.

In this case, the computer readable recording medium includes any type of recording devices in which computer system readable data is stored, for example, includes a ROM, a RAM, a CD-ROM, a DVD-ROM, a DVD-RAM, a magnetic tape, a floppy disk, a hard disk, or an optical data storage device.

Although an exemplary embodiment of the present invention has been described above, the spirit of the present invention is not limited to the exemplary embodiment suggested in this specification. Those skilled in the art may easily suggest another exemplary embodiment by adding, changing, or deleting a component within the scope of the same spirit of the present invention. However, it is understood that another exemplary also falls within the spiritual scope of the present invention.

## Claims

1. A quality management server of a recyclable waste paper which provides inspection information according to a state of a recyclable waste paper during an interim distribution step of a recyclable waste paper for recycling a waste paper stored from an interim collection company to improve product reliability of the recyclable waste paper, the server comprising:
a storage and release registration unit which registers storage information or release information of bales of the recyclable waste paper via an administrator or business operator terminal;
an inspection registration unit which registers the inspection information including a moisture content, a size, and a compression rate of a bale selected from the registered bales for every storage customer via the administrator or business operator terminal and further registers cooperativeness of a storage customer and cooperativeness of a transportation company in addition to the moisture content, the size, and the compression rate of the bale which is released at the time of releasing the registered bales;
a moisture management unit which determines an average moisture content on the basis of the registered moisture content and determines a total reduction rate corresponding to the determined average moisture content, the size, and the compression rate for every storage customer;
a management DB in which the storage information, the release information, and the inspection information are saved; and
a barcode management unit which attaches and registers an alternative barcode onto the bale when an original barcode of the registered bale is damaged at the time of releasing the bale, traces and manages release information corresponding to the alternative barcode when an inquiry on a barcode status is requested, and checks information on the bales to connect the alternative barcode to the damaged original barcode;
wherein the record of bales is traced and managed for every storage customer during a distribution step of the recyclable waste paper to improve reliability of interim distribution of the recyclable waste paper.

2. The server of claim 1, further comprising:
a stock management unit which calculates current stock information according to the storage information and the release information;
an inquiring and processing unit which searches information from the management DB according to an inquiry request on the storage information, the release information, the stock information, and the record of the bales from the administrator or the business operator terminal to provide the information; and
a report generating unit which generate a report according to the inquiry result.

3. The server of claim 2, wherein the inquiring and processing unit searches the storage information, the release information, storage inspect contents, release inspect contents, and the reduction rate from the management DB to generate record information of the bale.

4. The server of claim 3, wherein the management DB further includes: code information in which a basic code for a type of the recyclable waste paper, a customer, and a type of storage vehicle are saved and stock information generated on the basis of the storage information and the release information.

5. A method of managing a quality of a recyclable waste paper in a quality management server of a recyclable waste paper which provides inspection information according to a state of a recyclable waste paper during an interim distribution step of a recyclable waste paper for recycling a waste paper stored from an interim collection company to improve a product reliability of the recyclable waste paper, the method comprising:
a storage registration step of registering storage information of bales of the recyclable waste paper and inspection information including a moisture content, a size, and a compression rate of the bale for every storage customer, determining an average moisture content on the basis of the registered moisture content, and determining a total reduction rate corresponding to the determined average moisture content, the size, and the compression rate for every storage customer, by means of an administrator or business operator terminal;
a release registering step of further registering inspection information including cooperativeness of the storage customer and cooperativeness of a transportation company in addition to the inspection information including the release information of the bale, the moisture content, the size, and the compression rate of the bale, determining an average moisture content on the basis of the registered moisture content and a total reduction rate corresponding to the average moisture content, the size, and the compression rate, and registering an alternative barcode attached on a bale with a damaged barcode when the barcode of the registered bale is damaged, by means of the administrator or business operator terminal;
a step of calculating current stock information according to the storage information and the release information to update stock information; and
an inquiring and processing step of searching information according to an inquiry request on the storage information, the release information, the stock information, and the record of the bales from the administrator or business operator terminal to provide the information, tracing and managing the release information corresponding to the alternative barcode when an inquiry on an alternative barcode status is requested and checking respectively information on the bales to connect the alternative barcode to the damaged barcode to trace a cause when a defect is generated in the product,
wherein the record of bales is traced and managed for every storage customer during a distribution step of the recyclable waste paper to improve reliability of distribution.

6. The method of claim 5, wherein in the inquiring and processing step, the storage information, the release information, storage inspection contents, release inspection contents, and the reduction rate are searched to generate record information of the bale.
